# DEMANDE DE BREVET EUROPEEN

(11) **EP 2 322 023 A1**
(43) Date de publication de la demande: **18.05.2011**
(21) Numéro de dépôt: 10306186.7
(22) Date de dépôt: 28.10.2010
(51) Int. Cl.: A01B 69/00, G01D 5/12, A01B 63/02

(54) **Remorque agricole comprenant un dispositif de montage arrière rotatif**

(30) Priorité: 28.10.2009 FR 0957600; 28.10.2009 FR 0957601
(71) Demandeur: Jeantil, 35590 L'Hermitage (FR)
(72) Inventeur: Jeantil, Philippe, 35132 Vezin-le-Coquet (FR)
(74) Mandataire: Blot, Philippe Robert Emile

(57) **Abrégé**

Cette remorque est du type comprenant un châssis (8), un dispositif d'attelage avant (10) pour atteler la remorque à l'arrière d'un tracteur, et un dispositif de montage arrière (14) pour la fixation d'un outil agricole l'arrière de la remorque.

Selon un aspect de l'invention, le dispositif de montage arrière (14) est monté rotatif par rapport au châssis (8) autour d'un axe vertical pour autoriser un angle de braquage arrière entre un outil fixé à l'arrière de la remorque et le châssis (8).

## Description

La présente invention concerne le domaine des outils agricoles et plus particulièrement des remorques agricoles, notamment d'épandage, munies d'un dispositif de montage arrière pour la fixation d'un outil, notamment un outil d'épandage.

Un but de l'invention est de proposer une remorque permettant d'améliorer l'utilisation d'un outil fixé sur le dispositif de montage arrière.

A cet effet, l'invention propose une remorque du type comprenant un châssis, un dispositif d'attelage avant pour atteler la remorque à l'arrière d'un tracteur, et un dispositif de montage arrière pour le montage d'un outil à l'arrière de la remorque, caractérisée en ce que le dispositif de montage est monté rotatif par rapport au châssis autour d'un axe vertical pour autoriser un angle de braquage arrière entre un outil monté à l'arrière de la remorque et le châssis.

Selon d'autres modes de réalisation, le dispositif comprend une ou plusieurs des caractéristiques suivantes, prises isolément ou selon toutes les combinaisons techniquement possibles :
- elle comprend un dispositif de mesure d'angle pour mesurer l'angle de braquage arrière entre le dispositif de montage arrière et le châssis ;
- elle comprend un dispositif de mesure d'angle pour mesurer l'angle de braquage avant entre la remorque et un tracteur à laquelle elle est reliée ;
- elle comprend un dispositif de commande de l'angle de braquage arrière apte à imposer un angle de braquage arrière déterminé ;
- elle comprend une unité de commande apte à commander l'angle de braquage arrière en fonction de l'angle de braquage avant et de l'angle de braquage arrière mesurés ;
- le dispositif de montage arrière est prévu pour monter l'outil en porte-à-faux à l'arrière du châssis ;
- le dispositif de commande comprend un actionneur disposé entre le châssis et la partie rotative ; et
- le dispositif de montage arrière comprend un organe de support mobile de façon à pouvoir être sélectivement abaissé pour placer l'outil en position de travail, ou relevé, notamment jusqu'à une position de circulation permettant de circuler sur une route.

L'invention concerne également un procédé de commande d'une remorque du type précité, dans lequel on modifie l'angle de braquage arrière en fonction de l'angle de braquage avant.

L'invention a également pour objet un dispositif de mesure d'angle comprenant un organe de référence et un capteur montés rotatifs l'un par rapport à l'autre autour d'un axe de rotation, l'organe de référence comprenant un élément de référence s'étendant autour de l'axe de rotation à une distance de l'axe de rotation variable, le capteur étant apte à mesurer une distance avec l'élément de référence, de sorte que la distance mesurée par le capteur est fonction de l'angle de rotation de l'organe de référence par rapport au capteur.

Selon d'autres modes de réalisation, le dispositif de mesure d'angle selon l'invention comprend une ou plusieurs des caractéristiques suivantes, prises isolément ou selon toutes les combinaisons techniquement possibles :
- le capteur est disposé de façon à mesurer une distance dans un plan radial par rapport à l'axe de rotation ;
- le capteur est disposé de façon à mesurer une distance suivant une direction radiale par rapport à l'axe de rotation ;
- l'élément de référence est un bord, notamment un bord périphérique, de l'organe de référence ;
- le capteur est disposé de façon à mesurer une distance entre le capteur et l'élément de référence ;
- le capteur est un capteur sans contact ; et
- le capteur est un capteur électromagnétique et/ou un capteur inductif.

Enfin, l'invention concerne également un ensemble comprenant un véhicule menant, un véhicule mené, des moyens pour atteler le véhicule mené au véhicule menant, et un dispositif de mesure d'angle du type précité disposé de façon à pouvoir mesurer l'angle de braquage entre le véhicule menant et le véhicule mené. Le véhicule menant est par exemple choisi parmi un véhicule tracteur motorisé, une remorque non motorisée. Le véhicule mené est par exemple choisi par parmi une remorque ou un outil agricole destiné à être attelé à un tracteur ou à une remorque.

L'invention et ses avantages seront mieux compris à la lecture de la description qui va suivre, données uniquement à titre d'exemple, et faite en référence aux dessins annexés, sur lesquels :
- la figure 1 est une vue de côté d'un ensemble formé par une remorque et un dispositif d'épandage attelé à la remorque ;
- la figure 2 est une vue en perspective de trois quart arrière de la remorque ;
- les figures 3 à 6 sont des vues en perspectives de la partie arrière de la remorque, illustrant un dispositif de montage arrière de la remorque dans différentes positions ;
- les figures 7 et 8 sont des vues respectivement en perspective et de dessus d'un dispositif de mesure d'angle de braquage du dispositif de montage arrière ;
- les figures 9 à 11 sont des vues de dessus du dispositif de mesure d'angle dans différentes positions ;
- les figures 12 et 13 sont des vues de dessous d'un dispositif d'attelage avant de la remorque et d'un dispositif de mesure d'angle de braquage du dispositif d'attelage avant dans différentes positions ; et
- les figures 14 et 15 sont des vues de dessous de l'ensemble de la figure 1 attelé à l'arrière d'un tracteur dans deux configurations différentes.

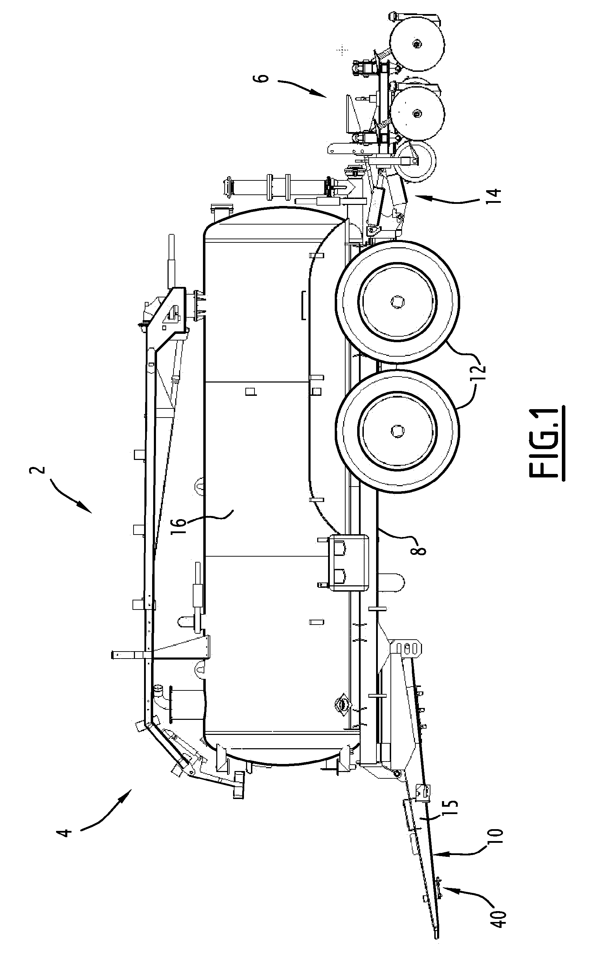

Tel qu'illustrée sur la figure 1, l'ensemble 2 est destiné à être attelé à l'arrière d'un tracteur pour l'épandage d'un produit sur une parcelle agricole. Il comprend la remorque 4 et un dispositif d'épandage 6 attelé à la remorque 4.

La remorque 4 comprend un châssis 8, un dispositif d'attelage avant 10 pour atteler la remorque 4 à l'arrière d'un tracteur, au moins un essieu 12.

La remorque 4 comprend un dispositif de montage arrière 14 pour atteler un outil à l'arrière de la remorque. Le dispositif de montage arrière 14 est prévu pour supporter l'outil et permettre la rotation de l'outil par rapport au châssis 8 de la remorque 4 autour d'un axe sensiblement vertical.

.En vue de l'épandage, la remorque 4 comprend une citerne 16 pour le stockage d'un produit à épandre, et le dispositif d'épandage 6 est fixé sur le dispositif de montage arrière 14.

Le dispositif d'épandage 6 est du type comprenant des disques prévus pour être enfoncés dans le sol afin d'ouvrir des saignées, le dispositif d'épandage comprenant en outre des moyens pour déposer du produit provenant de la citerne 16 dans les saignées. Un tel dispositif d'épandage permet de déposer le produit sous la surface du sol, ce qui permet une meilleure efficacité. Il est nommé « enfouisseur ». Le produit répandu est par exemple du lisier.

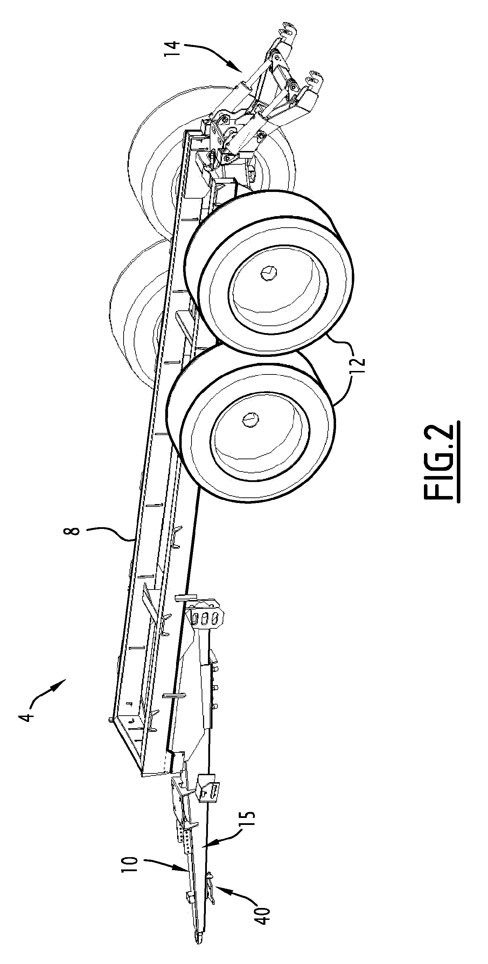

Tel qu'illustré sur la figure 2, le châssis 8 s'étend longitudinalement. Le dispositif d'attelage avant 10 est formé par une bielle d'attelage 15 fixe disposée à l'extrémité avant du châssis 8 et s'étend vers l'avant à partir du châssis 8. Les essieux 12 sont au nombre de deux et décalés vers l'extrémité arrière du châssis 8. Le dispositif de montage arrière 14 est disposé à l'extrémité arrière du châssis 8.

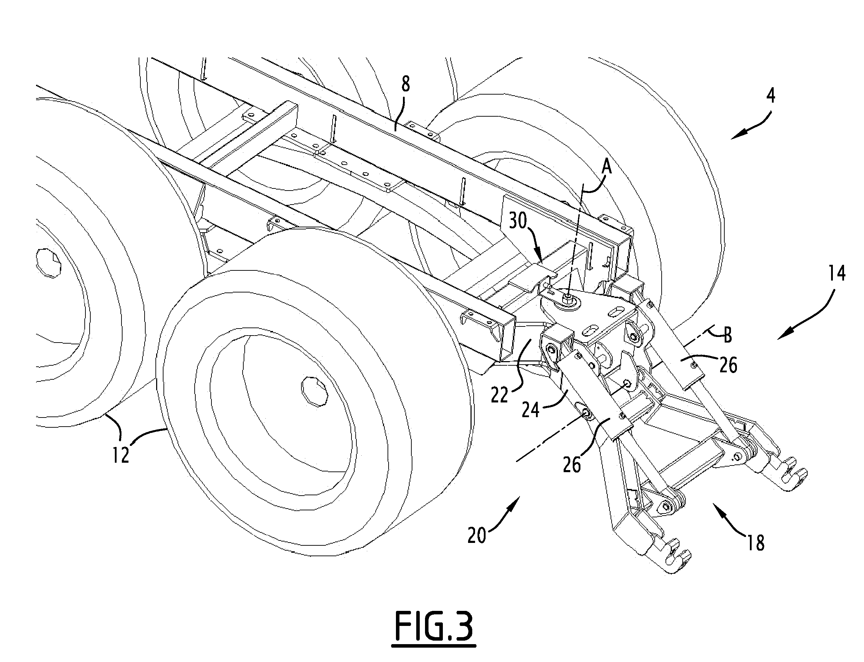

Tel qu'illustré sur les figures 3 à 6, le dispositif de montage arrière 14 comprend un organe de support 18 destiné à supporter un outil agricole en porte à faux à l'arrière du châssis 8.

Le dispositif de montage arrière 14 est monté rotatif par rapport au châssis 8 autour d'un axe A sensiblement vertical (angle de braquage).

A cet effet, le dispositif de montage arrière 14 est lié au châssis 8 par l'intermédiaire d'un pivot 20 d'axe A entre une partie fixe 22 du châssis 8 et une partie rotative 24 du dispositif de montage arrière 14.

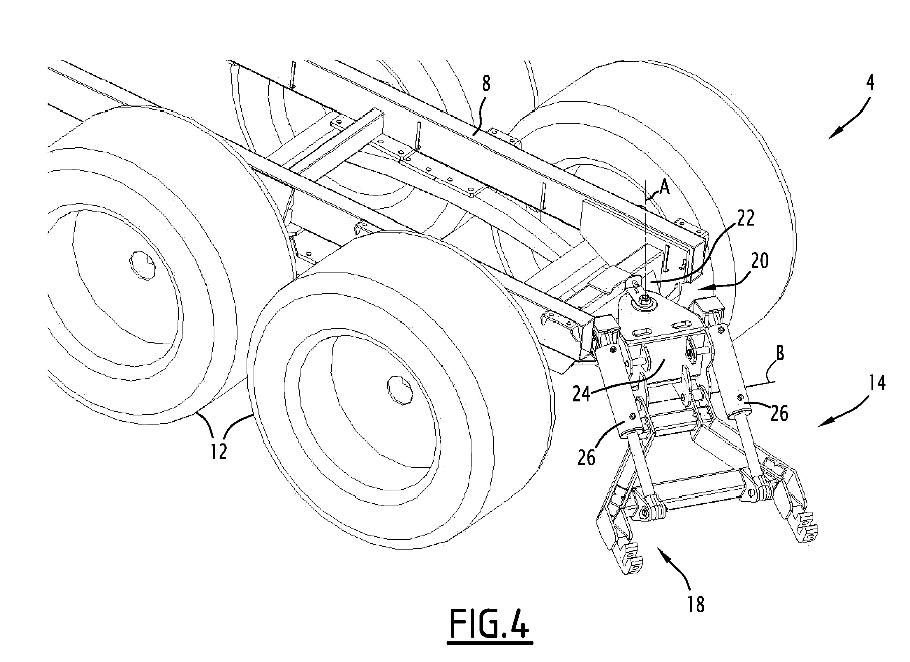

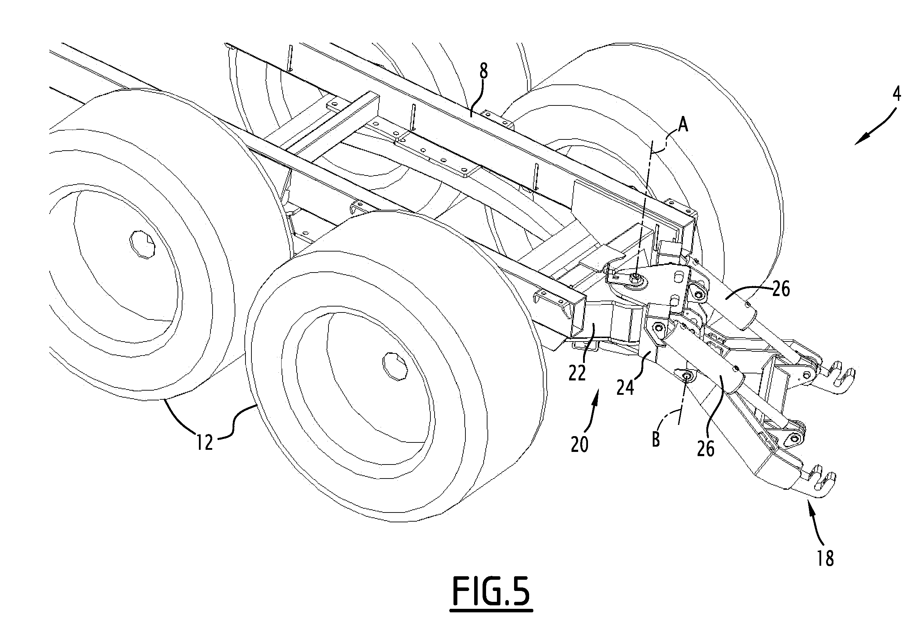

Il en résulte que le dispositif de montage arrière 14 peut pivoter par rapport au châssis 8 autour de l'axe A entre deux positions angulaires extrêmes (figures 4 et 5) autour d'une position neutre (figure 3). L'amplitude angulaire est par exemple de l'ordre de -30° à +30°, la position neutre étant prise comme référence d'angle nul.

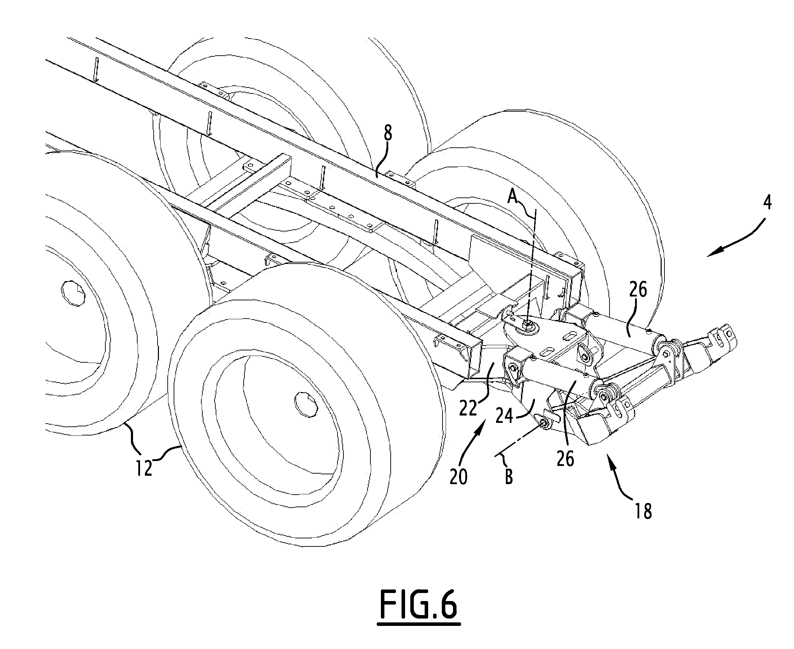

Tel qu'illustré sur les figures 3 et 6, l'organe de support 18 est mobile de façon à pouvoir être sélectivement abaissé (figure 3) pour placer un outil agricole en position de travail, ou relevé (figure 6), notamment jusqu'à une position de circulation permettant de circuler sur une route.

A cet effet, l'organe de support 18 est monté rotatif sur la partie rotative 24 autour d'un axe B sensiblement horizontal, et le dispositif de montage arrière 14 comprend en outre au moins un actionneur 26 s'étendant la partie rotative 24 et l'organe de support 18.

Dans l'exemple illustré, l'organe de support 18 présente la forme d'une fourche comprenant deux bras chacun muni à son extrémité libre d'un crochet de fixation. Les bras sont solidarisés par des traverses. Le dispositif de montage arrière 14 comprend deux actionneurs 26 hydrauliques, chaque actionneur 26 s'étendant entre la partie rotative 24 et une extrémité d'un bras respectif.

En variante, la fourche à deux bras est remplacée par deux bras indépendants, chaque bras étant commandé indépendamment par un actionneur respectif. Ceci permet de corriger un devers par un positionnement différent des deux bras en hauteurs.

La remorque 4 comprend un dispositif de commande de l'angle de braquage entre le dispositif de montage arrière 14 et le châssis 8 autour de l'axe A.

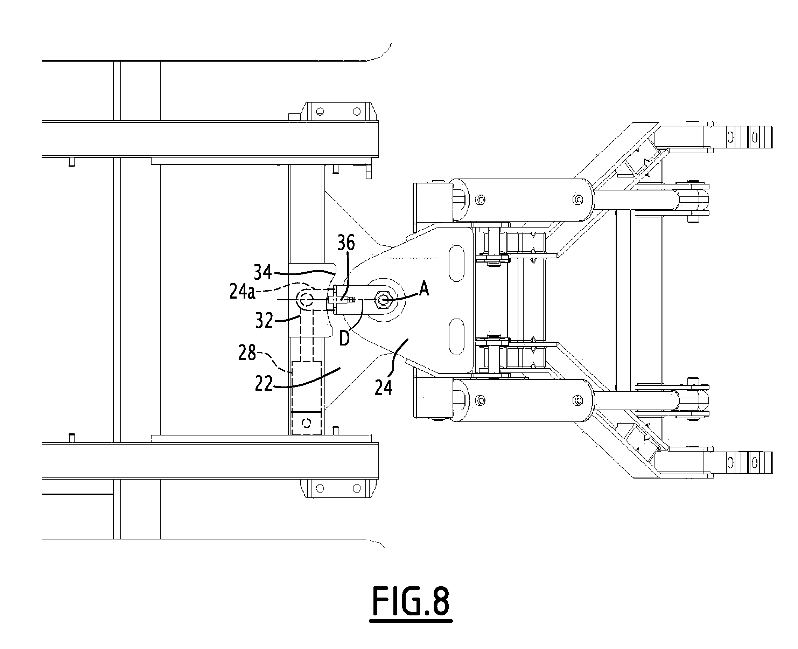

Ce dispositif de commande comprend par exemple un actionneur 28 disposé entre le châssis 8 et la partie rotative 24. Tel qu'illustré en pointillés sur la figure 8, l'actionneur 28 est un vérin hydraulique disposé sous le châssis 8 suivant une direction sensiblement orthoradiale par rapport à l'axe A, entre le châssis 8 et une extension de la partie rotative 24. Ainsi, une extension 24a ou une contraction du vérin entraîne une rotation de la partie rotative autour de l'axe A.

L'outil tel que le dispositif d'épandage porté en porte-à-faux à l'arrière de la remorque 4 tend à s'écarter de cette trajectoire vers l'extérieur dans les courbes. Le dispositif de montage arrière 14 rotatif autour d'un axe vertical crée un degré de liberté en rotation qui permet à l'outil de mieux suivre la trajectoire.

La commande de l'orientation du dispositif de montage arrière 14 permet de maintenir un outil sur la trajectoire notamment lorsque le dispositif d'épandage tend à s'écarter de la trajectoire, y compris en ligne droite. C'est le cas par exemple d'un dispositif d'épandage muni de disques inclinés par rapport à la verticale pour soulever une bande de terre et y placer en dessous le produit à épandre avant de reposer la bande de terre.

Tel qu'illustré sur la figure 3, la remorque 4 comprend un dispositif de mesure d'angle 30 pour mesurer l'angle atour de l'axe A entre l'organe de support 18 et le châssis 8 (angle de braquage).

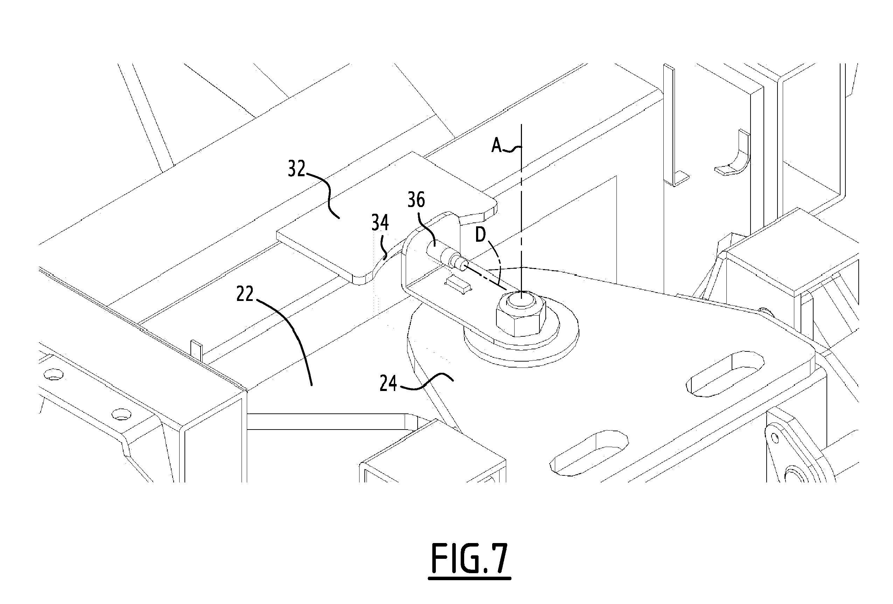

Le dispositif de mesure d'angle 30 est mieux visible sur les figures 7 et 8 qui représentent respectivement une vue en perspective agrandie et une vue de dessus de la partie arrière de la remorque 4.

Le dispositif de mesure d'angle 30 comprend un organe de référence 32 métallique ferromagnétique fixé sur le châssis 8. L'organe de référence 32 possède un bord de référence 34 s'étendant dans un plan radial par rapport à l'axe A. Le bord de référence 34 s'étend autour de l'axe de rotation A à une distance de l'axe de rotation variable. Le bord de référence 34 est incurvée à concavité tournée vers l'axe A. En particulier, le bord de référence 34 n'est pas un arc de cercle centré sur l'axe A. Le bord de référence 34 présente par exemple une distance à l'axe A variant progressivement le long du bord, de sorte que l'on ait une différence de distance entre les deux extrémités du bord de l'ordre de 10mm.

Le dispositif de mesure d'angle 30 comprend un capteur 36 fixé sur la partie mobile 24 du dispositif de montage arrière 14 pour mesurer une distance avec le bord de référence 34. Le capteur 36 est disposé de façon à mesurer une distance au bord de référence 34 dans une direction de mesure D radiale par rapport à l'axe A.

En fonction la position angulaire de la partie rotative 24 par rapport à la partie fixe 22, le capteur 36 se déplace avec la partie rotative 24 et une portion différente du bord de référence 34 est présentée en regard du capteur 36 suivant la direction de mesure D. Du fait que le bord de référence 34 s'étend autour de l'axe de rotation A à une distance de l'axe de rotation variable, la distance entre le capteur 36 et le bord de référence 34 suivant la direction de mesure D, et donc le signal fournit par le capteur 26, varient en fonction de la position angulaire de la partie rotative 24 par rapport à la partie fixe 22.

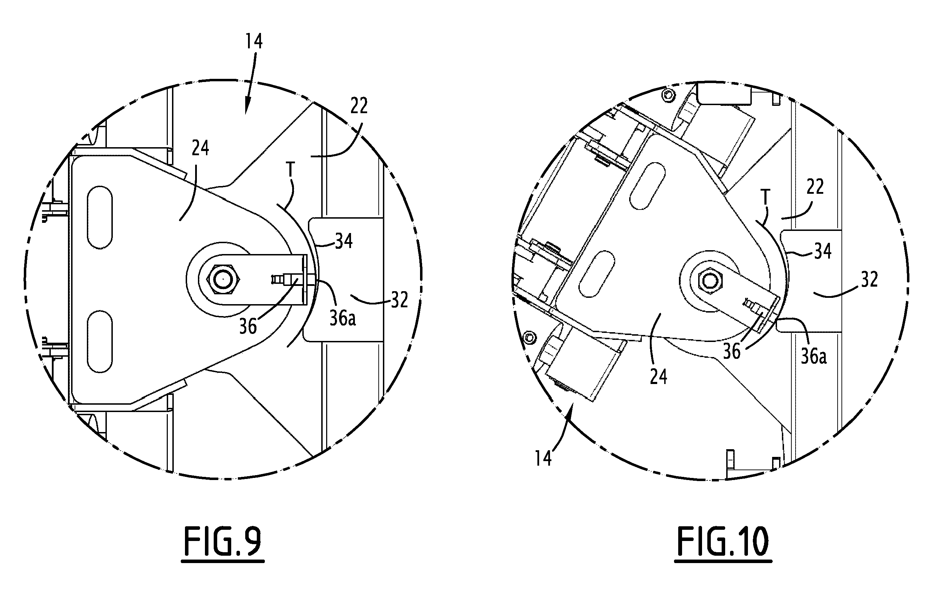

Les figures 9 à 11 illustrent différentes positions angulaires de la partie rotative 24 par rapport à la partie fixe 22. Sur ces figures, la trajectoire T circulaire de la tête de mesure 36a du capteur 36 est représentée schématiquement. Ceci permet d'appréhender la forme du bord 34 dont la distance à l'axe A, dans cet exemple, augmente régulièrement dans le sens anti-horaire en vue de dessus.

Ainsi, il est possible de déterminer un position angulaire autour d'un axe à partir d'une distance mesurée dans un plan radial par rapport cet axe, notamment une distance mesurée dans un direction radiale par rapport cet axe.

Le dispositif de mesure d'angle 30 est peu cher et robuste, ce qui représente un avantage, en particulier dans le domaine agricole compte tenu de conditions d'utilisation sévères.

Le capteur 36 est par exemple un capteur inductif émettant un champ magnétique et détectant la distance au bord de référence 34 en fonction d'une variation du champ magnétique. Ce type de capteur est robuste, fiable et peu cher. Il permet une mesure sans contact, ce qui est un gage de fiabilité et de robustesse. En variante, il est possible de prévoir tout autre capteur adapté pour mesurer une distance suivant une direction de mesure, par exemple un capteur sans contact optique, notamment laser, ou un capteur avec contact, par exemple du type comprenant un palpeur en contact avec le bord de référence et des moyens pour détecter le déplacement du palpeur.

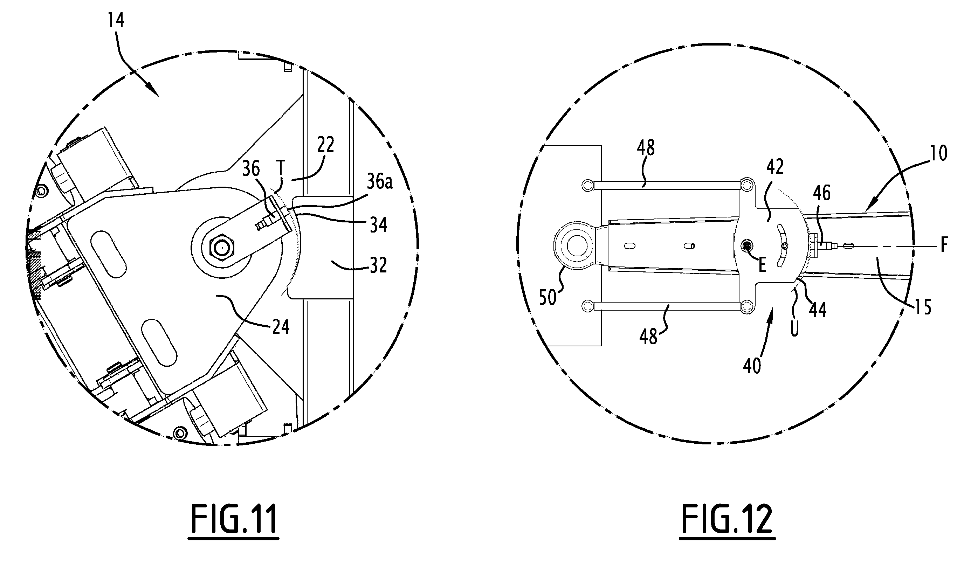

Tel qu'illustré sur les figures 11 et 12, la bielle d'attelage 15 est munie d'un dispositif de mesure d'angle 40 pour mesurer l'angle de rotation entre la remorque 4 est un tracteur à laquelle la remorque est attelée.

Le dispositif de mesure d'ange 40 comprend un organe de référence 42 monté rotatif sur la bielle d'attelage 15 autour d'un axe de rotation E. L'organe de référence 42 possède un bord de référence 44 s'étendant dans un plan radial par rapport à l'axe A. Le bord de référence 44 s'étend autour de l'axe de rotation à une distance de l'axe de rotation variable. Le bord de référence 44 est incurvée à concavité tournée vers l'axe A. En particulier, le bord de référence 44 n'est pas un arc de cercle centré sur l'axe A.

Le dispositif de mesure d'angle 40 comprend un capteur 46 fixé immobile sur la bielle d'attelage 15 pour mesurer une distance avec le bord de référence 44. Le capteur 46 est disposé de façon à mesurer une distance au bord de référence 44 dans une direction de mesure F radiale par rapport à l'axe E.

Le dispositif de mesure d'angle 40 fonctionne de manière analogue au dispositif de mesure d'angle 30.

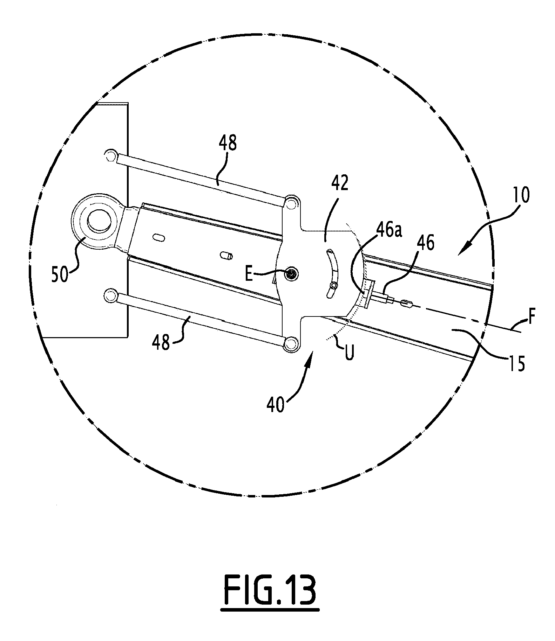

Le dispositif de mesure d'angle 40 comprend des moyens de renvois disposés de façon qu'une rotation de la remorque 4 par rapport au tracteur auquel elle est attelée est convertie en une rotation de l'organe de référence 42 par rapport à la bielle d'attelage 15. Les moyens de renvois comprennent par exemple des biellettes 48 de renvoi reliant l'organe de référence 44 au tracteur à proximité du point de liaison de la tête d'attelage 50 de la bielle 15 sur le tracteur. Ainsi, une rotation de la bielle 15 par rapport au tracteur est convertie en une rotation de l'organe de référence 40 par rapport à la bielle 15 d'un angle correspondant (figure 13).

Sur les figures 12 et 13, la trajectoire U circulaire de la tête de mesure 46a du capteur 46 est schématisée et permet d'appréhender la forme du bord 44 qui présente une distance à l'axe E croissante à l'axe E lorsque l'on parcours le bord 44 dans le sens anti-horaire en vue de dessous.

La remorque 4 comprend une unité de commande conçue ou programmée pour la mise en oeuvre d'un mode de travail, dans lequel, l'unité de commande compare l'angle de braquage avant entre la remorque 4 et un tracteur auquel elle est attelée et l'angle de braquage arrière du dispositif de montage arrière 14, et commande un dispositif de commande de braquage du dispositif de montage arrière 14 pour maintenir l'outil porté par le dispositif de montage arrière 14 sur la trajectoire choisie.

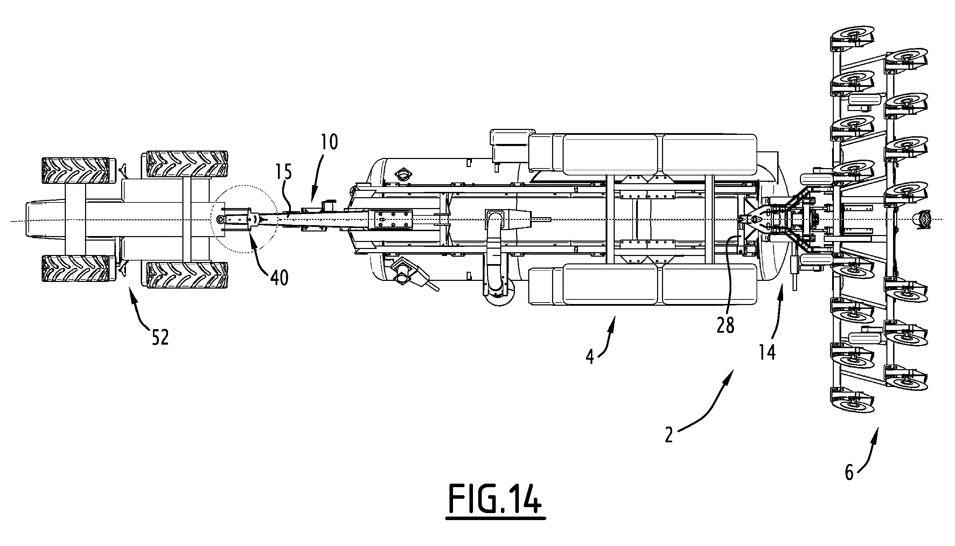

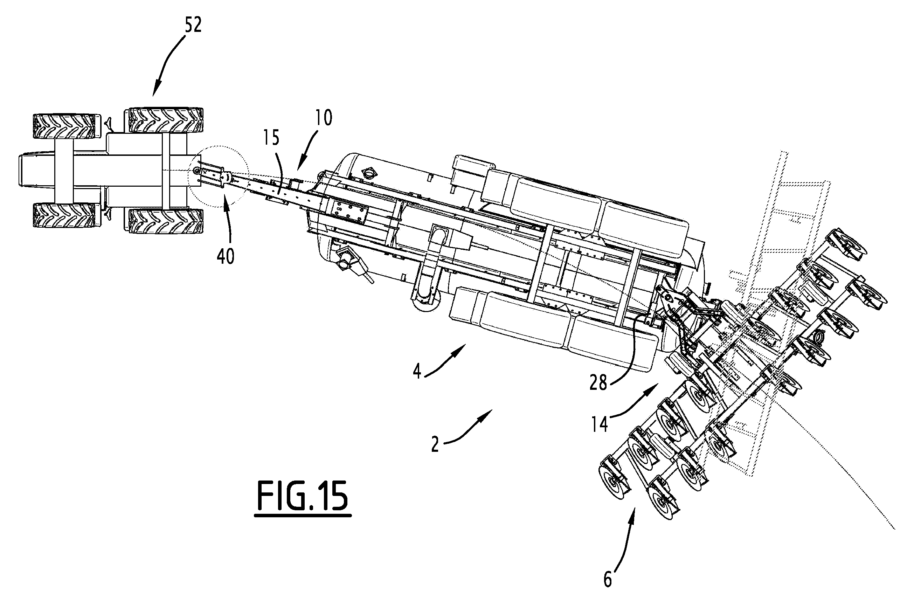

Le fonctionnement de la remorque 4 est ainsi illustré sur les figures 14 et 15 représentant des vues de dessus de l'ensemble 2 attelé à l'arrière d'un tracteur 52, respectivement en ligne droite (figure 14) et en courbe (figure 15).

En ligne droite, l'angle de braquage avant est nul et l'unité de commande commande le vérin 28 de façon à maintenir un angle de braquage arrière nul.

En courbe, la remorque 4 prend naturellement un angle de braquage avant avec le tracteur 52 du fait qu'elle est en appui sur le sol par les roues de ses essieux. En revanche, le dispositif d'épandage 6 tend à se déplacer différemment, du fait que ses disques enfoncés dans le sol sont inclinés. En l'absence d'action sur le dispositif de montage arrière 14, il pourrait en résulter un positionnement incorrect du dispositif d'épandage 6, et un mauvais travail du sol et une mauvaise application de produit (la position du dispositif d'épandage en position neutre est représentée en traits plus clairs).

L'unité de commande détecte l'angle de braquage avant et commande le vérin 30 pour faire pivoter le dispositif de montage arrière d'un angle de braquage arrière approprié permettant de centrer le dispositif d'épandage sur la trajectoire.

Ceci permet un épandage plus précis et plus efficace.

Avantageusement, l'unité de commande est conçue et/ou programmée pour la mise en oeuvre d'un mode de circulation dans lequel le dispositif de montage arrière 14 est maintenu à un angle de braquage arrière nul et relevé.

Un dispositif de mesure d'angle analogue aux précédents peut être utilisé pour mesurer des angles différents.

Il est possible d'utiliser un tel dispositif de mesure d'angle pour mesurer un angle de devers. Il est possible de munir le dispositif d'attelage de moyens de commande de l'angle de dévers.

## Revendications

1. Remorque (4), du type comprenant un châssis (8), un dispositif d'attelage avant (10) pour atteler la remorque à l'arrière d'un tracteur, un dispositif de montage arrière (14) pour la fixation d'un outil (6) à l'arrière de la remorque (4), et au moins un essieu (12), le dispositif de montage arrière (14) étant prévu pour monter l'outil (6) en porte-à-faux à l'arrière du châssis (8), **caractérisée en ce que** le dispositif de montage arrière (14) est monté rotatif par rapport au châssis (8) autour d'un axe vertical (A) pour autoriser un angle de braquage arrière entre l'outil (6) monté à l'arrière de la remorque (4) et le châssis (8), et **en ce que** la remorque (4) comprend un dispositif de commande de l'angle de braquage arrière, apte à imposer un angle de braquage arrière déterminé.

2. Remorque (4) selon la revendication 1, comprenant un dispositif de mesure d'angle (30) pour mesurer l'angle de braquage arrière entre le dispositif de montage arrière (14) et le châssis (8).

3. Remorque (4) selon la revendication 1 ou 2, comprenant un dispositif de mesure d'angle (40) pour mesurer un angle de braquage avant entre la remorque (4) et un tracteur à laquelle elle est reliée.

4. Remorque (4) selon les revendications 2 et 3, dans laquelle l'unité de commande est apte à commander l'angle de braquage arrière en fonction de l'angle de braquage avant et de l'angle de braquage arrière mesurés.

5. Remorque (4) selon l'une quelconque des revendications précédentes, dans laquelle le dispositif de commande comprend un actionneur (28) disposé entre le châssis (8) et la partie rotative (24).

6. Remorque (4) selon l'une quelconque des revendications précédentes, dans laquelle le dispositif de montage arrière (14) comprend un organe de support (18) mobile de façon à pouvoir être sélectivement abaissé (figure 3) ou relevé (figure 6).

7. Remorque (4) selon l'une quelconque des revendications 2 à 4, dans laquelle le ou chaque dispositif de mesure d'angle (30 ; 40) comprend un organe de référence (32 ; 42) et un capteur (36 ; 46) montés rotatifs l'un par rapport à l'autre autour d'un axe de rotation (A ; E), l'organe de référence (32 ; 42) comprenant un élément de référence (34 ; 44) s'étendant autour de l'axe de rotation (A) à une distance de l'axe de rotation variable, le capteur (36 ; 46) étant apte à mesurer une distance avec l'élément de référence (34 ; 44), de sorte que la distance mesurée par le capteur (36 ; 46) est fonction de l'angle de rotation de l'organe de référence par rapport au capteur (36 ; 46).

8. Remorque (4) selon la revendication 7, dans laquelle le capteur (36 ; 46) est disposé de façon à mesurer une distance dans un plan radial par rapport à l'axe de rotation (A).

9. Remorque (4) selon la revendication 7 ou 8, dans laquelle le capteur (36 ; 46) est disposé de façon à mesurer une distance suivant une direction radiale par rapport à l'axe de rotation (A).

10. Remorque (4) selon l'une quelconque des revendications 7 à 9, dans laquelle l'élément de référence (34 ; 44) est un bord, notamment un bord périphérique, de l'organe de référence (32 ; 42).

11. Remorque (4) selon l'une quelconque des revendications 7 à 10, dans laquelle le capteur (36 ; 46) est disposé de façon à mesurer une distance entre le capteur (36 ; 46) et l'élément de référence (34 ; 44).

12. Remorque (4) selon l'une quelconque des revendications 7 à 11, dans laquelle le capteur (36 ; 46) est un capteur sans contact.

13. Remorque (4) selon l'une quelconque des revendications 7 à 12, dans laquelle le capteur (36 ; 46) est un capteur électromagnétique et/ou un capteur inductif.

14. Procédé de commande d'une remorque (4) selon l'une quelconque des revendications précédentes, dans lequel on modifie l'angle de braquage arrière en fonction de l'angle de braquage avant.
